(19)

**Europäisches Patentamt**

**European Patent Office**

**Office européen des brevets**

(11) **EP 3 597 602 A1**

(12) # EUROPEAN PATENT APPLICATION

(43) Date of publication:
**22.01.2020 Bulletin 2020/04**

(51) Int Cl.:
**C01G 49/06** (2006.01) **C09C 1/24** (2006.01)

(21) Application number: **18184286.5**

(22) Date of filing: **18.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **LANXESS Deutschland GmbH**
  **50569 Köln (DE)**
• **Friedrich-Alexander-Universität Erlangen-Nürnberg**
  **91054 Erlangen (DE)**

(72) Inventors:
• **Rosenhahn, Carsten**
  **47906 Kempen (DE)**
• **Müller, Rolf**
  **47829 Krefeld (DE)**
• **Schaufler, Larissa**
  **45149 Essen (DE)**
• **Kathrein, Christine**
  **40474 Düsseldorf (DE)**
• **Weber-Czaplik, Anna**
  **40474 Düsseldorf (DE)**
• **Klupp Taylor, Robin**
  **91301 Forchheim (DE)**
• **Golkar, Saeedeh**
  **91080 Uttenreuth (DE)**

(54) **HEMATITE PIGMENTS**

(57)     A hematite pigment having

i) an aspect ratio AR of lower than 1.5, preferably lower than 1.3, most preferably lower than 1.2,

ii) a CIELAB a* value of $\geq$ 28.5, in particular from 29 to 33,

iii) a CIELAB b*-value of $\leq$ 71 % of the CIELAB a* value, preferably $\leq$ 70% of the CIELAB a* value

iv) a CIELAB L* value of $\geq$ 39, in particular from 40 to 43, preferably 40 to 41.

EP 3 597 602 A1

**Description**

The present invention relates to new hematite pigments, a process for making them and its use.

**Prior Art**

Iron oxides are employed in many industrial fields. Thus, for example, they are used as color pigments in ceramics, building materials, plastics, paints, surface coatings and paper, serve as basis for various catalysts or support materials and can adsorb or absorb pollutants. Magnetic iron oxides are employed in magnetic recording media, toners, ferrofluids or in medical applications, for example as contrast agent for magnetic resonance tomography.

Iron oxides can be obtained by precipitation, hydrolysis and decomposition reactions of iron salts (Ullmann's Encyclopedia of Industrial Chemistry, VCH Weinheim 2006, Chapter 3.1.1. Iron Oxide Pigments, pp. 61-67). The Laux, Copperas, precipitation, calcination and Penniman red processes have by far the greatest industrial importance.

The aqueous production of finely divided hematite, which corresponds to the modification $\alpha$-$Fe_2O_3$, is, however, considerably more complicated. Use of a ripening step and addition of a finely divided iron oxide of the maghemite modification, $\gamma$-$Fe_2O_3$, or lepidocrocite, $\gamma$-FeOOH, as nucleus enables hematite also to be produced by a direct aqueous precipitation like in WO 2009/100767A.

A further method of producing iron oxide red pigments is the Penniman red process, also referred to as nitrate process or direct red process (see EP 1106577A or US 6,503,315). Here, iron oxide pigments are produced by iron metal being dissolved and oxidized with addition of an iron salt and an iron oxide nucleus. Thus, SHEN, Qing; SUN, Fengzhi; Wujiyan Gongye 1997, (6), 5-8 (CH), Wujiyan Gongye Blanjlb, (CA 128:218378n) have disclosed a process in which dilute nitric acid acts on iron at elevated temperature. This forms a hematite nucleus suspension. This is built up in a manner known per se to give a suspension of red pigment and the pigment is, if desired, isolated from this suspension in a conventional manner.

However, the red pigments produced by this process have a comparatively low color saturation which is similar to the color saturation of a commercial 130 standard and are therefore primarily used in the building industry. The 130 standard corresponds to the reference standard Bayferrox® 130 (product of LANXESS Deutschland GmbH, Germany) customarily used for iron oxide pigment color measurements.

US20140134216 reports a means to obtain hematite pigments that have excellent red color and are highly stable to grain growth through thermal treatment. Their pigments are however based on composite structures containing smaller grains separated by a buffer layer containing phosphorous and silica. Their integration into a paint system is not demonstrated and color values are reported for bulk powders.

In US20170253745A1 hematite pigments with improved color values are reported. However, even color values of these red pigments can still be improved.

It was therefore an object of this invention to provide a new process for making hematite with improved color, in particular with respect to the b* color value which was normally very high and thereby impact the color appearance, giving a more orange cast.

Surprisingly it was found that hematite pigments having the following features can first time be prepared by a process for manufacturing defined hereinafter.

**Hematite pigment**

The hematite pigment according to the present invention having

    i) an aspect ratio AR of lower than 1.5, preferably lower than 1.3, most preferably lower than 1.2,
    ii) a CIELAB a* value of $\geq$ 28.5, in particular from 29 to 33,
    iii) a CIELAB b*-value of $\leq$ 71 % of the CIELAB a* value, preferably $\leq$ 70% of the CIELAB a* value and
    iv) a CIELAB L* value of $\geq$ 39, in particular from 40 to 43, preferably 40 to 41.

A hematite pigment is an iron oxide pigment having have the hematite modification $\alpha$-$Fe_2O_3$. Preferably hematite pigments according to the present invention have a water content of lower than 1.0% by weight, preferably lower than 0.5 % by weight.

**Feature i)**

The aspect ratio AR can be determined by the different techniques to measure or determine aspect ratios reported in the literature. A vast number of studies (Baudet et al., 1993; Jennings and Parslow, 1988; Lohmander, 2000; Pabst et al., 2000 Pabst et al., 2001 Pabst et al., 2006a Pabst et al., b, 2007 Slepetys and Cleland, 1993) described how laser ensemble diffraction and single particle light scattering (static and dynamic) offer an opportunity to measure aspect ratios.

The aspect ratio AR can also be determined from scanning or transmission electron microscope images for a statistically relevant number of particles and their distribution characteristics (mean, standard deviation) computed. To determine the AR preferably an ellipse is fitted to each particle to give $AR_E$ which is the ratio of the major ellipse axis length to the minor ellipse axis length.

A perfect ball shape has an AR of 1.0. Hence, the preferred aspect ratio AR is from 1.0 to lower than 1.5, preferably from 1.0 to lower than 1.3, most preferably from 1.0 to lower than 1.2.

**Features ii), iii) and iv)**

The a* and b* values of the CIELAB system are measured in the surface coating test customary for iron oxide pigments using as method the DIN EN ISO 11664-4:2011-07 and DIN EN ISO 787-25:2007) in a defined alkyd resin having a thixotropic effect.

A preferred a* value is from 28.5 to 33, in particular form 29 to 33, more particular from 30 to 32.

The preferred b* value is between $16 \leq b* \leq 0.71$ times a*, in particular between $16 \leq b* \leq 0.70$ times a*.

The L* value is measured in the surface coating test customary for iron oxide pigments using as method the DIN EN ISO 11664-4:2011-07 and DIN EN ISO 787-25:2007) in a defined alkyd resin having a thixotropic effect.

Preferably the hematite pigments of the present invention do have an average particle size in the range of 100 to 600 nm, more preferably within the range of 150 to 500 nm, most preferably in the range of 200 to 400 nm.

The BET specific surface area of the inventive pigments is preferably in the range of 10 to 60 $m^2/g$, in particular 10 to 40 $m^2/g$, more preferred 10 to 20 $m^2/g$. The BET specific surface area can be determined by the method described in DIN-ISO 9277.

The preferred hematite pigments do have a phosphorous content is lower than 0.5 wt.-%, in particular from 0 to lower than 1 wt.%, in particular from 0 to lower than 0.5 wt.-%. Also preferred is a hematite, according to the present invention having a silicon content of lower than 1 wt.%, preferably from 0 to lower than 1 wt.%, in particular lower than 0.5 wt.-%.

Very good color properties can be achieved for hematite pigments according to the present invention having a chromium content lower than 0.5 wt.% preferably from 0.001 wt.% to 0.4 wt.%, more preferably from 0.001 to 0.1 wt.%.

**Process**

The hematite pigments according to the present invention can be prepared by a process containing the steps:

a) suspending a goethite containing pigment and an alkali metal phosphate in water, whereby the goethite containing pigment having an aspect ratio AR of lower than 1.5, preferably lower than 1.3, most preferably lower than 1.2,
b) isolating the solids from the suspension of step a) and
c) treating the isolated solids of step b) in the presence of oxygen at a temperature of 750 to 1000°C.

**Ad a) Goethite containing pigment**

The goethite containing pigment may contain goethite, which is $\alpha$-FeOOH, as only iron oxide or a mixture of goethite and hematite, the latter which is $\alpha$-Fe$_2$O$_3$.

The goethite containing pigment as used in step a) preferably consists more than 90 wt.%, preferably more than 95 wt.%, in particular more than 98 wt.%, more preferably more than 99.5 wt.% of goethite and optionally hematite.

In a preferred embodiment the goethite containing pigment does contain goethite as only iron oxide or does contain a mixture of goethite and hematite as iron oxide, whereby the preferred weight ratio of goethite vs hematite in said mixture is from 1000 : 1 to 1 : 1000, preferably from 10 : 1000 to 400 : 1000.

Alternatively another preferred mixture of goethite and hematite as iron oxide has a weight ratio of goethite vs hematite from 1000 : 300, in particular from 1000 : 1 to 1000 : 100, more preferred from 1000 : 1 to 1000 : 50.

In another alternative embodiment of the present invention for the ratio of goethite vs hematite as iron oxide compounds, it is also preferred to the use the XRPD intensity fraction parameter of hematite which for a powder x-ray diffraction spectrum peak at 33.0°<2theta<33.5° with a Cu K$_\alpha$-radiation with an intensity comprising a contribution from hematite is preferably less than 95%, in particular from 30 to less than 90 %.

The determination of the hematite contribution to the intensity of the powder x-ray diffraction powder spectrum at 33.0°<2theta<33.5° is carried out as follows. A x-ray diffraction spectrum of a pigment powder sample is measured in the range 22°<2theta<35° with a Cu K$_\alpha$-radiation. Following appropriate background removal, for instance by fitting the background with a polynomial function or the method of Goehner [R. P. Goehner: Anal. Chem., 50 (1978), 1223], the intensity of any peak at 24.0°<2theta<24.5° is multiplied by 306 and divided by the intensity of the peak at 33.0°<2theta<33.5°. If no peak exists at 24.0°<2theta<24.5° then the hematite contribution to the peak at 33.0°<2theta<33.5° is 0%.

For pure goethite this parameter is 0% and for pure hematite this parameter is 100%.

The preferred goethite containing pigment used for the process of the present invention does have a delta b* < 0.6, preferably < 0.5, determined after milling according to the described method.

In a preferred embodiment of the present invention the used goethite containing pigment has

i) a CIELAB L* value of 53 to 60, particular from 56 to 60, more preferred from 58 to 59 and

ii) CIELAB b*-value of 39 to 48, particular from 42 to 48, more preferred from 43 to 47.

The measurement of the CIELAB features is preferably done in the same way as mentioned above. The delta b*-value is the difference of the respective b*-values determined before and after the milling of the respective pigments, whereby the milling method is preferably a treatment of the pigment done with a 10 mm agate ball in a vibrating ball mill at a frequency of 2000 $min^{-1}$ for 2 minutes, preferably with a pigment sample of 0,5 g.

The preferred goethite containing pigment used in step a) has an aspect ratio AR of lower than 1.5, preferred an aspect ratio AR from 1.0 to lower than 1.5, preferably lower than 1.3, most preferably lower than 1.2.

A preferred goethite containing pigment also contains chromium in a content ≤ 0.5 wt.% preferably from 0.001 wt.% to 0.4 wt.%, more preferably from 0.001 to 0.1 wt.%.

Also preferred is to use a goethite containing pigment which has:

i) an aspect ratio AR of lower than 1.5, preferably lower than 1.3
ii) a CIELAB L* value of 56 to 60
iii) a CIELAB b*-value of 42 to 48 and
iv) preferably an average particle size in the range of 100 to 600 nm.

Also preferred is to use a goethite containing pigment having

i) an aspect ratio AR of lower than 1.5, preferably lower than 1.3, most preferably lower than 1.2 in particular lower than 1.1.
ii) a CIELAB L* value of 58 to 59
iii) a CIELAB b*-value of 43 to 47
iv) and a delta b* < 0.6, preferably < 0.5, determined after milling according to the described method.

The delta b*-value is the difference of the respective b*-values determined before and after the milling of the respective pigments, whereby the milling method is preferably a treatment of the pigment done with a 10 mm agate ball in a vibrating ball mill at a frequency of 2000 $min^{-1}$ for 2 minutes, preferably with a pigment sample of 0,5 g.

The preferred goethite containing pigment of the component a) can also be obtained according to the process containing the steps:

a1) dissolution of ferric (III) nitrate in water,
a2) treatment of the solution obtained according to step a1) at a temperature in the range of 55 to 65 °C, in particular for 10 h or more,
a3) isolating the goethite from the suspension obtained according to step a2),
a4) suspending the isolated goethite of step a3) in water and a5) treating the suspension of step a4) hydrothermally at a temperature of 120 to 300°C, under autogenous pressure, in particular for 1h or more.

**Step a1)**

The ferric nitrate that is preferably used in step a1) is $Fe(NO_3)_3 x9H_2O$. Even more preferred the ferric nitrate has a purity of > 99 wt.%, in particular > 99,9 wt.%. Ferric nitrate concentration should be in a range of 0.01 to 0.12 M, preferably from 0.05 to 0.1M, in particular from 0.055 to 0.09 M, even more preferable from 0.06 to 0.065 M.

It was found to be advantageous to optionally add $Cr^{3+}$ ions to the water in step a1). The preferred range of $Cr^{3+}$ concentration is 1 mg/L to 25 mg/L. The $Cr^{3+}$ ions can be added, through various ways, for instance by addition of $Cr(NO_3)_3 \cdot 9H_2O$. Alternatively, a source of $Fe(NO_3)_3 x9H_2O$ with suitable amounts of $Cr^{3+}$ already present can be identified. Finally, a source of $Fe(NO_3)_3 x9H_2O$ with higher than needed amounts of $Cr^{3+}$ could have its chromium content reduced through recrystallization of $Fe(NO_3)_3 x9H_2O$ from concentrated nitric acid.

The water used in step a1) for dissolving the ferric nitrate has preferably a total content of alkali and alkaline earth of smaller than 2 ppm.

The step a1) is conducted preferably at a temperature of 15 to 25 °C, in particular of 20 to 25 °C. Before the temperature is increased to the value used in step a2), it was found advantageous to let the solution obtained according to step a1) stay for some time, preferably for 5 to 20 hours, preferably for 10 to 29 hours.

**Step a2)**

After step a1) the temperature of the aqueous solution is increased to a range of 55 to 65 °C. Preferably the temperature is ramped up smoothly, in particular with a rate of 2.5 K/min or less, preferably lower. The reaction taking place is assumed to follow the general chemical equation:

$$Fe(NO_3)_3 x9H_2O(aq) \rightarrow FeOOH (s) + 3HNO_3(aq) + 7H_2O$$

The reaction time at the achieved temperature should preferably be 10 h or longer, in particular 20 hours or longer, more preferably 24 hours or longer. Volume changes in the reactor through evaporation of solution are preferably kept under 10 vol.-%. This can be achieved by a closed reaction vessel. During step a2) an aqueous suspension is obtained.

**Step a3)**

After the treatment of step a2) the pigment that has been formed, precipitated and sank to the bottom of the reactor. The solids are isolated preferably by being filtered from the suspension and washed with water and optionally dried. Preferably the solid is washed with water until the conductivity is less than $1000\mu S/c$.

**Step a4)**

The pigment isolated from the treatment of step a3), preferably is given to water to form an aqueous suspension with a solid content of 10 wt.% or lower, preferably of 5 wt. % or lower, in particular of 2 wt.% or lower, more in particular of 0.15 to 0.3 wt.%, based on the aqueous suspension.

**Step a5)**

The suspension prepared in step a5) is then preferably treated in an autoclave and heated to a temperature in the range of 120 to 300 °C, preferably to 150 to 300°C, most preferably 160 to 280°C under autogenous pressure. Normally, the higher the temperature the higher the amount of hematite in the goethite oxide containing pigment.

This so called hydrothermal treatment is done preferably for 1h or longer, more preferred for 12 to 24h. In particular the treatment is finished after 24 h.

The suspension is preferably stirred during hydrothermal treatment. The autoclave is preferably made out of stainless steel, in particular with Teflon lining.

The solids are preferably filtered from the suspension and washed with water and optionally dried.

In step a) the goethite containing pigment is in particular used in an amount of 0.5 to 10 wt%, preferably in an amount of 2 to 5 wt% based on the supension.

In step a) preferably the alkali metal phosphate is an anhydrous alkali metal phosphate. The alkali metal phosphate may be sodium hexametaphosphate, also known as sodium polyphosphate. Other phosphates, which can be used to replace all or part of the sodium hexametaphosphate, include tetrasodium pyrophosphate, mono-, di- and tri-sodium phosphate, and the corresponding potassium compounds. Preferred alkali metal phosphate is sodium meta phosphate.

Preferably the solid content of the suspension is from 1 to 10.5 wt.%, preferably of 5 wt. % or lower, in particular of 1 to 2 wt.%.

The alkali metal phosphate preferably is added to the suspension in an amount of 0.5 to 10 wt.%, preferably from 2 to 5 wt.% based on the suspension.

After dissolution of the alkali metal phosphate the pH is preferably adjusted to the range from 4 to 7, more preferably from 4.5-6. Preferably the pH is monitored and adjusted by addition of acid if needed, including but not limited to, phosphoric acid, until it is in the range 4 to 7, more preferably from 4.5 to 6.

The formed suspension is preferably held at room temperature for at least 10 minutes, more preferably at least 1 hour, still more preferably at least 12 hours, most preferably at least 24 hours.

**Step c)**

The solids are preferably collected by a suitable method like filtration or sedimentation from the suspension, optionally though not preferably, washed with water and then dried.

The thermal treatment of the isolated solids is preferably carried in air as preferred oxygen source, in a furnace whereby the temperature is raised at a rate of preferably not more than 100°C/min in particular not more than 10°C/min to a temperature of between 750°C and 1000°C more preferably between 750°C and 900°C. The solid is preferably calcined at this temperature for at least 10 minutes before being cooled by removal from the oven or, more preferably at a rate preferably less than 10°C/min. Following cooling the calcined solid may be ground gently to break up any large aggregates.

**Use of inventive pigments**

The invention also refers to the use of the inventive pigments as defined above for coloring products of the ink, paint, coating, building material, plastic and paper industries, in foods, in baking varnishes or coil coatings, in sand granules, sand-lime bricks, enamels and ceramic glazes and in products of the pharmaceutical industry, particularly in tablets. In particular the inventive pigments are preferably used in paints and coatings.

**Examples**

**Methods: Measurement of L\*, a\* and b\***

To measure the pigment color according to DIN EN ISO 11664-4:2011-07 and DIN EN ISO 787-25:2007) in a defined alkyd resin which preferably is Setal® F 48, the pigment is dispersed in a coating system based on a mid-oil alkyd. The mill base is used to prepare paint films that are dried and colorimetrically evaluated in comparison to a reference system.

A detailed description of the measurement system is given below.

The pigment is dispersed using a muller (plate-type) in an air-drying lacquer system. The lacquer system (lacquer) consists of the following components:

| | |
|---|---|
| 95.26% | Setal® F 48 (binder from Nuplex, medium oil, alkyd resin of petrol / xylene mixture 38 to air dry based on drying vegetable fatty acids in: 7 with a nonvolatile content of about 55% oil content / triglyceride in the non-volatile approximately 48%, phthalic anhydride in the nonvolatile fraction about 26%) |
| 0.78% | 2-butanone oxime, 55% in mineral spirits (skinning agents) |
| 1.30% | Octa Soligen® calcium (wetting agents, calcium salt of branched $C_6$-$C_{19}$ - fatty acids in the hydrocarbon mixture (containing 4% Ca; Borchers AG) |
| 0.22% | cobalt Octa Soligen® 6 (dry matter, cobalt (2+) salt of branched $C_6$ - $C_{19}$ fatty acids in a hydrocarbon mixture (containing 6% Co), Borchers AG) |
| 0.87% | zirconium Octa Soligen® 6 (dry matter, zirconium branched $C_6$ -$C_{19}$ fatty acids in a hydrocarbon mixture (containing 6% Zr), Borchers AG) |
| 1.57% | glycolic acid n-butyl ester (= Hydroxyessigsäurebutylester). |

The components are mixed with a high speed to the finished coating. A plate-type (Muller), as in DIN EN ISO 8780-5 (April 1995), is used as described. To apply a ®ENGELSMANN JEL 25/53 muller with an effective plate diameter of 24 cm. The speed of the lower plate is about 75 for at first by attaching a 2.5 kg weight on the loading bar, the force between the plates will be at about 0.5 kN. There are dispersed method described 0.4 g of pigment and 1.00 g of paint in one stage to 100 revolutions with 2.5 kg loading weight in accordance with the DIN EN ISO 8780-5 (April 1995), section. The Muller is opened and the lacquer is swiftly collected on the lower plate outside of the center. At closing further 1.00 g lacquer are added and folded the plate. After two stages at 50 revolutions without loading weight the preparation is completed be.

The pigmented lacquer is coated with a film applicator (gap of at least 150 microns, more than 250 microns) on a non-absorbent cardboard. The varnished cardboard (spread) is then dried at room temperature for at least 12 h. Prior to the color measurement of the spread is dried one hour at about 65 ° C (± 5 ° C) and cooled.

Preparation in an alkyd enamel for measuring the brightening.

The pigment and the brightening agent is dispersed with a muller (plate-Farbenausreibmachine) in an air-drying lacquer system. As brightening a commercial Tronox RKB 2 titanium dioxide pigment is used. The lacquer system (lacquer) corresponds to that described above.

The components of the coating system are mixed with a high speed to the finished coating.

The pigmented lacquer and the lacquer coating are as described above, with 0.1500 g of pigment to be tested, 0.7500 g Tronox® RKB 2 titanium dioxide pigment and 2.0 gramms of alkyd resin are weighed.

Colorimeter

A spectrophotometer ("colorimeter") having the d/8 measuring geometry without a gloss trap was used. This measuring geometry is described in ISO 7724/2-1984 (E), section 4.1.1, in DIN 5033 part 7 (July 1983), section 3.2.4 and in DIN 53236 (January 1983), section 7.1.1.

A DATAFLASH® 2000 measuring instrument (Datacolor International Corp., USA) was employed. The colorimeter was calibrated against a white ceramic working standard, as described in ISO 7724/2-1984 (E) section 8.3. The reflection data of the working standard against an ideally matt-white body are deposited in the colorimeter so that, after calibration with the white working standard, all colored measurements are related to the ideally matt-white body. The black-point calibration was carried out using a hollow black body from the colorimeter manufacturer.

**Colorimetry**

The result of the colorimetry is a reflection spectrum. As far as the calculation of colorimetric parameters is concerned, the illuminant used to take the measurement is unimportant (except in the case of fluorescent samples). From the reflection spectrum it is possible to calculate any desired colorimetric parameter. The colorimetric parameters L*, a* and b* used in this case are calculated in accordance with DIN 6174 (CIELAB values) to the lightsource D65.

A gloss trap, if present, is switched off. The temperature of colorimeter and test specimen was approximately $25°C \pm 5°C$.

**Test of Pigment Milling Stability (for Goethite)**

0.5g of pigment powder was ground for 2 minutes with a 10 mm agate ball in a vibrating ball mill with a frequency of 2000 min-1 made in the Dismembrator R type from Sartorius. A full shade paint drawdown was prepared as above.

**Colorimetric measurements**

Colorimetric measuring is done with the colorimeter Spectraflash 600 plus. The settings are as described above

**Measurement of particle size and aspect ratio:**

The circle equivalent area particle size $x_c$ is determined by analyzing SEM images of isolated or a contiguous monolayer of particles using a suitable PC program (e.g. ImageJ). First the image is suitably preprocessed in order to ensure high contrast between the particles and background. Secondly the image is thresholded in order to obtain a binary image whereby the background is white and the particles black. Then contiguous particles are separated, either manually by drawing white lines between them or, preferably, using an automated function (e.g. Watershed algorithm). Finally each black region corresponding to a single particle is analyzed whereby its area is determined (area A) and an ellipse is fitted to it (major and minor axis length $x_{major}$ and $x_{minor}$). The particle size $x_c$ is determined by $x_c = \sqrt{(4A/\pi)}$. The ellipse aspect ratio is determined by $AR_e = x_{major}/x_{minor}$. Distributions of $x_c$ and $AR_e$ can be determined by measuring a sufficient number of particles and counting them according to their number or mass to form a number- or mass-weighted distribution respectively.

**BET Surface Area**

The BET surface area was determined via the nitrogen sorption in accordance with the multi-point method. Prior to the measurement the sample was outgassed in a stream of dry nitrogen at 120° C for 12 h. The measuring temperature was 77 K.

**XRD Powder Diffraction**

X-ray diffraction (XRD) was performed using a Bruker AXS D8 Advance diffractometer. The device was equipped with a VANTEC-1 detector and a Ni filter. Cu K-alpha radiation (wavelength = 154.06 pm) was used. The X-ray diffractograms were recorded in Bragg-Brentano geometry in the range 20°<2theta< 80°. The step width was 0.014° and the accumulation time was 1 s for each step. The determination of the hematite contribution to the intensity of the powder x-ray diffraction powder spectrum 33.0°<2theta<33.5° is carried out as follows. Following background removal by fitting the background signal data with a polynomial function and subtracting it from the raw data, the intensity of any peak at 24.0°<2theta<24.5° is multiplied by 306 and divided by the intensity of the peak at 33.0°<2theta<33.5°. If no peak exists at 24.0°<2theta<24.5° then the hematite contribution to the peak at 33.0°<2theta<33.5° was taken to be 0%.

**Experimental**

**Example 1:** Starting material: Ferric nitrate nonahydrate

100g Ferric nitrate nonahydrate was dissolved in 45 g of 60% nitric acid at 60 °C followed by 24 hours recrystallization at 7 °C and separation and drying of the crystals under vacuum.

**Example 2:** Typical synthesis of spheroidal goethite particles with controlled particle size

Ferric nitrate nonahydrate was recrystallized according to the procedure in Example 1. Five 100 mL polyethylene bottles were filled with a 62 mM concentration aqueous ferric nitrate solution (solvent: ultrapure water) and different amounts of chromium (III) nitrate were added. Table 1 summarizes the ferric nitrate concentration and chromium content in each bottle. The solutions were aged at room temperature for 24 hours before being transferred to an oven preheated to 60°C and then held there for 24 hours. The produced solids were washed and recovered according to gravity sedimentation to concentrate to a smaller volume. Subsequently, the suspensions were centrifuged at up to 3000RCF, the supernatants were removed and replaced with pure water. The process was repeated 3 times. Then the solids were placed in a drying oven at 60°C for 24 hours. The respective samples were imaged by scanning electron microscopy. The mean and standard deviations of the mass weighted particle size distributions and the mean particle aspect ratio ($AR_e$) determined by image analysis of a statistically significant number of particles are shown in Table 1. The mean size ($x_{c1,3}$) can be seen to decrease monotonically with increasing chromium concentration. The mean values of $AR_e$ are below 1.15, indicating that the particles are spheroidal.

**Table 1** Varied reaction parameters and product particle dimensions for Example 2

| Sample | Ferric nitrate concentration / mM | Added chromium content / mg/L | $x_{c,1,3}$ / nm | $AR_e$ / - |
|--------|-----------------------------------|-------------------------------|------------------|------------|
| 2A | 62 | 0 | 423 +/- 49 | 1.15 ± 0.09 |
| 2B | 62 | 2.5 | 369 +/- 51 | 1.11 +/- 0.08 |
| 2C | 62 | 5 | 315 +/- 44 | 1.14 +/- 0.09 |
| 2D | 62 | 7.5 | 309 +/- 45 | 1.11 +/- 0.09 |
| 2E | 62 | 25 | 239 +/- 37 | 1.15 +/- 0.12 |

**Example 3:** Typical synthesis of spheroidal goethite particles at litre scale - short reaction time

Recrystallized ferric nitrate nonahydrate according to the procedure in Example 1 was used to form a 1 L solution of 62 mM ferric nitrate aqueous solution (solvent: ultrapure water). Within 24 hours of dissolution the solution was placed in a sealed 1 litre low density polyethylene bottle in an oven already preheated to 60°C. The bottle was removed from the oven after 24 hours. The solids were washed and recovered according to gravity sedimentation to concentrate to a smaller volume. Subsequently, the suspension was centrifuged at up to 3000RCF, the supernatant was removed and replaced with pure water. The process was repeated 3 times. Then the solids were placed in a drying oven at 60°C for 24 hours. The respective samples were imaged by scanning electron microscopy. The mean and standard deviation of the mass weighted distribution was 390 +/- 33 nm while the mean and standard deviation of the aspect ratio ($AR_e$) was 1.11 +/- 0.07. The BET specific surface area was measured to be 80 $m^2/g$. The full shade L*, a*, b* color values of the pigment measured in Setal® F 48 as described above were 54.4, 19.0 and 39.6 respectively

**Example 4:** Typical synthesis of spheroidal goethite particles at litre scale - long reaction time

The procedure of Example 3 was repeated with the single difference that the ferric nitrate solution was held at 96 hours at 60°C (rather than 24 hours in Example 3). The mean and standard deviation of the product powder mass weighted distribution was 371 +/- 31 nm while the mean and standard deviation of the aspect ratio ($AR_e$) was 1.20 +/- 0.16. The BET specific surface area was measured to be 44 $m^2/g$. The full shade L*, a*, b* color values of the pigment measured in Setal® F 48 as described above were 57.0, 18.2 and 42.9 respectively

**Example 5:** Hydrothermal treatment of spheroidal goethite

In a typical procedure spheroidal goethite particles produced according to Example 2, 3 or Example 4 were redispersed in ultrapure water at a concentration of 0.2 wt% and placed in a Teflon lined autoclave. The autoclave was sealed and heated to between 120°C and 300°C for up to 30 hours. Following cooling, the solids were washed and recovered according to gravity sedimentation to concentrate to a smaller volume. Subsequently, the suspension was centrifuged at up to 3000RCF, the supernatant was removed and replacement with pure water. The process was repeated 3 times. Then the solid was dried. Table 2 shows the hematite contribution to the intensity of the powder x-ray diffraction powder spectrum at 33.0°<2theta<33.5° for samples produced according to conditions identical to Sample 2A in Example 2, Table 1 and subsequently hydrothermally treated at various temperatures for various times. Table 3 shows the full shade L*, a*, b* color values of pigments measured in Setal® F 48 produced according to Examples 3 and 4 and subsequently hydrothermally treated. Following a milling test Sample 5F pigment was measured to have full shade L*, a*, b* color values of 58.2, 17.9, 45.4 respectively.

**Table 2** Effect of hydrothermal treatment temperature and time on hematite contribution to XRD powder spectrum at 33.0°<2theta<33.5°

| Sample | Hydrothermal treatment temperature / °C and time / h | Hematite contribution to x-ray diffraction powder spectrum at 33.0°<2theta<33.5° / % |
|---|---|---|
| 5A | 170°C, 15 hours | 0 |
| 5B | 200°C, 15 hours | 0 |
| 5B | 240°C, 15 hours | 37 |
| 5C | 240°C, 30 hours | 76 |
| 5D | 250°C, 15 hours | 84 |

**Table 3** Effect of hydrothermal treatment on Full Shade L*, a*, b* color values

| Sample | Starting pigment | Hydrothermal treatment temperature / °C and time/h | L* | a* | b* |
|---|---|---|---|---|---|
| 5E | Example 3 | 170°C, 15 hours | 56.6 | 18.6 | 43.2 |
| 5F | Example 4 | 170°C, 20 hours | 58.5 | 17.9 | 45.7 |

**Example 6:** Phosphate treatment of spheroidal iron oxide particles

In a typical procedure spheroidal iron oxide particles produced according to Examples 2, 3, 4 or 5 were dispersed in water at a concentration of 20g/L. A concentrated aqueous solution of sodium hexametaphosphate was added to the dispersion under stirring (500 rpm) so that the final concentration of sodium hexametaphosphate was 20g/L. The pH was measured with a standard pH probe and appropriate amounts of 0.1M phosphoric acid solution were added to reduce it to 5.5. The suspension was stirred for 24 hours. Subsequently, the suspension was centrifuged at up to 3000RCF, the supernatant was removed. Then the solid was dried in an oven at 60°C for 10 hours.

**Example 7:** Calcination of spheroidal iron oxide particles

In a typical procedure spheroidal iron oxide particles produced according to Examples 2, 3, 4, 5 or 6 were placed in a ceramic crucible and calcined in air in a furnace at temperatures between 400°C and 800°C for between 1 hour and 10 hours. The heating and cooling rate of the furnace was set to at 10°C/min).
**Example 8:** Comparison of color properties of pigment powders produced according to embodiments of the invention with non-inventive sample.
Pigment powders were produced according to Example 7 whereby parameters of the dependent Examples 3, 4, 5 or 6 were varied (Table 4). In all cases the initial spheroidal goethite particles were produced according to Examples 3 or 4. In the case of chromium addition, the relevant sample from Example 2 was scaled up as in Example 3.
Table 5 shows the result of morphological and color characterization. It can be seen that pigments representing various embodiments of the invention have significantly improved color values over the BFX 110M industry standard pigment in addition to other standard pigments (Table 6).

**Table 4** Parameters used for comparative samples 8A and samples produced according to various embodiments of the Invention 8B-8F

| Sample | Added chromium content / mg/L (Example 2) | Reaction time/ hours (Example 3/4) | Hydrothermal treatment temperature / °C and time/ h (Example 5) | Phosphate treatment (Example 6) | Calcination temperature / °C (Example 7) | Calcination time/ hours (Example 7) |
|---|---|---|---|---|---|---|
| 8A | 0 | 24 | None | None | 400 | 1 |
| 8B | 0 | 24 | None | Yes | 700 | 1 |
| 8C | 0 | 24 | 240°C, 20 hours | Yes | 700 | 1 |
| 8D | 0 | 96 | 170°C, 20 hours | Yes | 800 | 1 |
| 8E | 25 | 24 | None | Yes | 700 | 1 |
| 8F | 8 | 24 | None | Yes | 700 | 1 |
| 8G | 4 | 24 | 240°C, 20 hours | Yes | 800 | 1 |

**Table 5** Morphological and color characterization of comparative samples 8A, 8B and 8F and samples produced according to various embodiments of the Invention 8C, 8D, 8G

| Sample | $x_{c,1,3}$/ nm | $AR_E$ | BET surface area $m^2$/g | L* | a* | b* | C* | %b*/a* |
|---|---|---|---|---|---|---|---|---|
| 8A | 230±32 | 1.20 ± 0.12 | 37 | 39.1 | 28.7 | 19.3 | 34.6 | 67.25 |
| 8B | 309±30 | 1.13 ± 0.09 | 21 | 39.0 | 28.3 | 19.2 | 34.2 | 67.84 |
| 8C | 312 ± 40 | 1.12 ± 0.09 | 15 | 40.2 | 29.3 | 20.7 | 35.9 | 70.65 |
| 8D | 280 ± 37 | 1.25 ± 0.17 | Not measured | 40 | 30.5 | 20.8 | 36.9 | 68.20 |
| 8E | 156 ± 26 | Not measured | Not measured | 40.9 | 29.7 | 22.0 | 37.0 | 74.07 |
| 8F | 238 ± 26 | 1.20 ± 0.13 | Not measured | 40.2 | 29.7 | 21.5 | 36.7 | 72.39 |
| 8G | 268 ± 29 | 1.16 ± 0.12 | Not measured | 40.5 | 31.5 | 21.7 | 38.3 | **68.89** |
| BFX 110M | | | 14.6 | 39.5 | 27.7 | 20.1 | 34.2 | 72.56 |

**Table 6** Some commercial hematite pigments (CIELAB data measured under the same conditions as above):

| Pigment | L* | a* | b* | %b*/a* |
|---|---|---|---|---|
| Bayferrox® 110M | 39,53 | 27,66 | 19,93 | 72.05 |
| Bayferrox® 105M | 40,17 | 28,65 | 21,41 | 74.73 |
| Bayferrox® 120M: | 37,94 | 27,22 | 18,03 | 66.22 |
| Bayferrox ®130M | 37,58 | 26,82 | 16,55 | 61.72 |
| Bayferrox ®140M | 35,86 | 24,46 | 13,77 | 56.30 |

(continued)

| Pigment | L* | a* | b* | %b*/a* |
|---|---|---|---|---|
| Bayferrox® 180M | 32,04 | 15,93 | 6,86 | 43.08 |
| Copperas Red® R1599D | 41,3 | 30,0 | 22,0 | 73.50 |

**Claims**

1. Hematite pigment having

    i) an aspect ratio AR of lower than 1.5, preferably lower than 1.3, most preferably lower than 1.2,
    ii) a CIELAB a* value of $\geq$ 28.5, in particular from 29 to 33,
    iii) a CIELAB b*-value of $\leq$ 71% of the CIELAB a* value, preferably $\leq$ 70% of the CIELAB a* value
    iv) a CIELAB L* value of $\geq$ 39, in particular from 40 to 43, preferably 40 to 41.

2. Hematite according to claim 1, having an average particle size in the range of 100 to 600 nm.

3. Hematite, according to at least one of the claims 1 to 2, having a phosphorous content of lower than 1 wt.%.

4. Hematite, according to at least one of the claims 1 to 3, having a silicon content of lower than 1 wt.%

5. Hematite, according to at least one of the claims 1 to 5, having a chromium content $\leq$ 0.5 wt.%.

6. Process for manufacturing a hematite according to claim 1 containing the steps

    a) suspending a goethite containing pigment and an alkali metal phosphate in water, whereby the goethite containing pigment having an aspect ratio AR of lower than 1.5, preferably lower than 1.3, most preferably lower than 1.2,
    b) isolating the solids from the suspension of step a) and
    c) treating the isolated solids of step b) in the presence of oxygen at a temperature of 750 to 1000°C.

7. The process according to claim 6, wherein the goethite containing pigment as used in step a) consist more than 90 wt.%, preferably more than 95 wt.%, in particular more than 98 wt.%, more preferably more than 99.5 wt.% of goethite or a mixture of goethite and hematite.

8. The process according to claim 6 or claim 7, wherein the goethite containing pigment does contain goethite as only iron oxide or does contain a mixture of goethite and hematite as iron oxide, whereby the weight ratio of goethite vs hematite in said mixture is from 1000 : 1 to 1 : 1000, preferably from 10 : 1000 to 400 : 1000.

9. The process according to claim 6 or claim 7, wherein the goethite containing pigment does contain a mixture of goethite and hematite as iron oxide, whereby the weight ratio of goethite vs hematite in said mixture is from 1000 : 300, in particular from 1000 : 1 to 1000 : 100, more preferred from 1000 : 1 to 1000 : 50.

10. The process according to claim 6 or claim 7, wherein the goethite containing pigment does contain a goethite or a mixture of goethite and hematite as iron oxide, whereby the XRD intensity fraction parameter of hematite for a powder x-ray diffraction spectrum peak at 33.0°<2theta<33.5° with a Cu $K_\alpha$-radiation with an intensity comprising a contribution from hematite is less than 95%, in particular from 30 to less than 90 %.

11. The process according to at least one of the claims 6 to 10, wherein the goethite containing pigment as used in step a) does have a delta b* < 0.6, preferably < 0.5, determined after milling according to the described method.

12. The process according to at least one of the claims 6 to 11, wherein the goethite containing pigment as used in step a) has an aspect ratio AR of lower than 1.5, preferably lower than 1.3, most preferably lower than 1.2.

13. The process according to at least one of the claims 6 to 11, wherein the goethite containing pigment as used in step a) is obtained according to the process containing the steps:

a1) dissolution of ferric (III) nitrate in water,

a2) treatment of the solution obtained according to step a1) at a temperature in the range of 55 to 65 °C, in particular for 10 h or more,

a3) isolating the goethite from the suspension obtained according to step a2),

a4) suspending the isolated goethite of step a3) in water and

a5) treating the suspension of step a4) hydrothermally at a temperature of 120 to 300°C, under autogenous pressure, in particular for 1h or more.

14. Use of hematite pigments according to at least one of claim 1 to 5 for coloring products of the ink, paint, coating, building material, plastic and paper industries, in foods, in baking varnishes or coil coatings, in sand granules, sand-lime bricks, enamels and ceramic glazes and in products of the pharmaceutical industry, particularly in tablets.

Europäisches
Patentamt

European
Patent Office

Office européen
des brevets

**EUROPEAN SEARCH REPORT**

Application Number

EP 18 18 4286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 911 369 A1 (BAYER AG [DE]) 28 April 1999 (1999-04-28) * paragraphs [0018] - [0033]; examples 1-7 * | 1-14 | INV. C01G49/06 C09C1/24 |
| A | US 2006/196392 A1 (MEISEN ULRICH [DE] ET AL) 7 September 2006 (2006-09-07) * paragraphs [0020] - [0052]; examples 1-3 * | 1-14 | |
| A,D | US 2017/253745 A1 (CZAPLIK WALDEMAR [DE] ET AL) 7 September 2017 (2017-09-07) * paragraphs [0020] - [0113]; example 1; tables 2-3 * | 1-14 | |
| A | EP 0 997 500 A1 (TODA KOGYO CORP [JP]) 3 May 2000 (2000-05-03) * claims 1-13; example 1; table 3 * | 1-14 | |
| A,D | WO 2009/100767 A1 (ROCKWOOD ITALIA SPA [IT]; GARETTO FRANCESCO [IT]) 20 August 2009 (2009-08-20) * page 4, line 6 - page 9, line 15; examples 1-2 * | 1-14 | TECHNICAL FIELDS SEARCHED (IPC) C01G C09C |
| A | US 2005/274284 A1 (ROSENHAHN CARSTEN [DE] ET AL) 15 December 2005 (2005-12-15) * examples 2-4; table 1 * | 1-14 | |

-/--

The present search report has been drawn up for all claims

| Place of search | Date of completion of the search | Examiner |
|---|---|---|
| The Hague | 3 January 2019 | Corrias, M |

EPO FORM 1503 03.82 (P04C01)

Europäisches
Patentamt

European
Patent Office

Office européen
des brevets

**EUROPEAN SEARCH REPORT**

Application Number

EP 18 18 4286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TATI NURHAYATI ET AL: "Syntheses of Hematite ([alpha]-Fe$_2$O$_3$) Nanoparticles Using Microwave-Assisted Calcination Method", MATERIALS SCIENCE FORUM, vol. 737, 1 January 2013 (2013-01-01), pages 197-203, XP055537910, DOI: 10.4028/www.scientific.net/MSF.737.197 * "Experimental section"; figures 2-3,5 * | 1-14 | |
| A | OPUCHOVIC OLGA ET AL: "Historical hematite pigment: Synthesis by an aqueous sol-gel method, characterization and application for the colouration of ceramic gl", CERAMICS INTERNATIONAL, ELSEVIER, AMSTERDAM, NL, vol. 41, no. 3, 9 December 2014 (2014-12-09), pages 4504-4513, XP029223518, ISSN: 0272-8842, DOI: 10.1016/J.CERAMINT.2014.11.145 * "Sample preparation", "Results and discussion"; table 2 * | 1-14 | TECHNICAL FIELDS SEARCHED (IPC) |

The present search report has been drawn up for all claims

| Place of search | Date of completion of the search | Examiner |
|---|---|---|
| The Hague | 3 January 2019 | Corrias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 4286

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2019

| Patent document cited in search report | | Publication date | Patent family member(s) | | Publication date |
|---|---|---|---|---|---|
| EP 0911369 | A1 | 28-04-1999 | AU | 751726 B2 | 29-08-2002 |
| | | | BR | 9804015 A | 07-12-1999 |
| | | | CA | 2251425 A1 | 20-04-1999 |
| | | | CN | 1215027 A | 28-04-1999 |
| | | | DE | 19746262 A1 | 22-04-1999 |
| | | | EP | 0911369 A1 | 28-04-1999 |
| | | | ES | 2179411 T3 | 16-01-2003 |
| | | | JP | H11228144 A | 24-08-1999 |
| | | | US | 6179908 B1 | 30-01-2001 |
| | | | ZA | 9809509 B | 21-04-1999 |
| US 2006196392 | A1 | 07-09-2006 | AU | 2004222134 A1 | 30-09-2004 |
| | | | BR | PI0408405 A | 21-03-2006 |
| | | | CA | 2519262 A1 | 30-09-2004 |
| | | | DE | 10311550 A1 | 07-10-2004 |
| | | | EP | 1606355 A1 | 21-12-2005 |
| | | | ES | 2662882 T3 | 10-04-2018 |
| | | | JP | 4473860 B2 | 02-06-2010 |
| | | | JP | 2006524273 A | 26-10-2006 |
| | | | US | 2006196392 A1 | 07-09-2006 |
| | | | WO | 2004083318 A1 | 30-09-2004 |
| US 2017253745 | A1 | 07-09-2017 | AU | 2015314215 A1 | 30-03-2017 |
| | | | BR | 112017004876 A2 | 12-12-2017 |
| | | | CA | 2960836 A1 | 17-03-2016 |
| | | | CN | 106715336 A | 24-05-2017 |
| | | | EP | 3191409 A1 | 19-07-2017 |
| | | | JP | 6440830 B2 | 19-12-2018 |
| | | | JP | 2017530080 A | 12-10-2017 |
| | | | KR | 20170056532 A | 23-05-2017 |
| | | | RU | 2017112052 A | 11-10-2018 |
| | | | US | 2017253745 A1 | 07-09-2017 |
| | | | WO | 2016038152 A1 | 17-03-2016 |
| EP 0997500 | A1 | 03-05-2000 | DE | 69916552 T2 | 14-04-2005 |
| | | | EP | 0997500 A1 | 03-05-2000 |
| | | | US | 6231661 B1 | 15-05-2001 |
| WO 2009100767 | A1 | 20-08-2009 | EP | 2240410 A1 | 20-10-2010 |
| | | | US | 2011076224 A1 | 31-03-2011 |
| | | | WO | 2009100767 A1 | 20-08-2009 |
| US 2005274284 | A1 | 15-12-2005 | AU | 2005202048 A1 | 01-12-2005 |
| | | | BR | PI0506385 A | 03-10-2006 |
| | | | CA | 2507331 A1 | 14-11-2005 |
| | | | CN | 1696208 A | 16-11-2005 |

EPO FORM P0459

For more details about this annex : see Official Journal of the European Patent Office, No. 12/82

ANNEX TO THE EUROPEAN SEARCH REPORT
ON EUROPEAN PATENT APPLICATION NO.

EP 3 597 602 A1

EP 18 18 4286

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2019

| Patent document cited in search report | Publication date | Patent family member(s) | Publication date |
|---|---|---|---|
| | | DE 102004024013 A1 | 01-12-2005 |
| | | EP 1605023 A2 | 14-12-2005 |
| | | ES 2389728 T3 | 30-10-2012 |
| | | JP 5001525 B2 | 15-08-2012 |
| | | JP 2006008990 A | 12-01-2006 |
| | | MX PA05005166 A | 06-12-2005 |
| | | US 2005274284 A1 | 15-12-2005 |
| | | ZA 200503859 B | 27-09-2006 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009100767 A
- EP 1106577 A
- US 6503315 B
- US 20140134216 A
- US 20170253745 A1

**Non-patent literature cited in the description**

- Iron Oxide Pigments. Ullmann's Encyclopedia of Industrial Chemistry. VCH, 2006, 61-67
- **SHEN, QING ; SUN, FENGZHI.** *Wujiyan Gongye,* 1997, vol. 6, 5-8
- **R. P. GOEHNER.** *Anal. Chem.,* 1978, vol. 50, 1223